(19) Europäisches Patentamt

European Patent Office

Office européen des brevets

(11) Veröffentlichungsnummer: **0 240 685**

**A2**

(12) **EUROPÄISCHE PATENTANMELDUNG**

(21) Anmeldenummer: **87102661.3**

(22) Anmeldetag: **25.02.87**

(51) Int. Cl.⁴: **B65D 47/26** , A61C 19/00

(30) Priorität: **05.04.86 DE 8609228 U**

(43) Veröffentlichungstag der Anmeldung:
**14.10.87 Patentblatt 87/42**

(84) Benannte Vertragsstaaten:
**AT BE DE ES FR GB IT**

(71) Anmelder: **Vita Zahnfabrik H. Rauter GmbH & Co KG**
**Spitalgasse 3**
**D-7880 Bad Säckingen(DE)**

(72) Erfinder: **Diener, Horst**
**Irisweg 3**
**D-7900 Ulm-Gögglingen(DE)**

(74) Vertreter: **Selting, Günther, Dipl.-Ing. et al**
**Deichmannhaus am Hauptbahnhof**
**D-5000 Köln 1(DE)**

(54) **Spender für pastöse Massen.**

(57) Die Erfindung bezieht sich auf einen Spender für pastöse Massen, insbesondere zahntechnisches Verblendmaterial oder dergleichen, in Form einer von einem Deckel (30) verschlossenen kreisförmigen Dose (10) mit einem Boden (17) und einer Wand (16). In dem Randbereich des Dosenhohlraumes ist ein Füllstück (11) angeordnet, das in Schließposition des Deckels (30) eine in dem Deckel (30) ausgebildete Öffnung (32) abdeckt. Der Deckel (30) ist in einer endlosen Rille (36) geführt auf der Dose (10) drehbar. Ein solcher Spender kann mit einer Hand geöffnet und geschlossen werden, während die andere Hand ein Entnahmeinstrument hält.

EP 0 240 685 A2

FIG.1

FIG.2

## Spender für pastöse Massen

Die Erfindung bezieht sich auf einen Spender für pastöse Massen, insbesondere zahntechnisches Verblendmaterial oder dergleichen, in Form einer von einem Deckel verchlossenen kreisförmigen Dose mit einem Boden und einer Wand.

Zur Verpackung von zahntechnischem Verblendmaterial dienen bisher Deckeldosen, deren Deckel abgenommen werden muß, damit ihr Inhalt zugänglich ist. Dies ist für den Anwender umständlich, weil er das Instrument, mit dem die Masse appliziert werden soll, aus der hand legen muß, um mit beiden Händen die Dose öffnen zu können. Außerdem ist es für die Beschaffenheit der Masse ungünstig, daß die Dose bis zur Beendigung der jeweiligen Benutzung offen bleibt. Da bei der Zahnverblendung im übrigen unterschiedliche Materialien zum Einsatz kommen, z.B. Dentinmasse Schmelzmasse und Halsmasse, ist nachteilig, daß der Deckel, auf dem die jeweilige Massenart vermerkt ist, meistens umgedreht ne ben der Dose auf dem Tisch liegt, so daß seine Kennzeichnung nicht mehr wahrnehmbar ist.

Der Erfindung liegt die Aufgabe zugrunde, einen Spender für pastöse Massen so auszubilden, daß er mit einer Hand öffenbar und schließbar ist.

Diese Aufgabe wird erfindungsgemäß dadurch gelöst, daß in dem Randbereich des Dosenhohlraumes ein Füllstück angeordnet ist, das in Schließposition des Deckels eine in dem Deckel ausgebildete Öffnung abdeckt und daß der Deckel in einer endlosen Rille geführt auf der Dose drehbar ist.

Auf diese Weise wird ein dosenförmiger Behälter zu einem Spender, der sich mit einer Hand halten und zum Öffnen und Verschließen mi der gleichen Hand bedienen läßt, so daß die andere Hand zur Handhabung eines Spachtels oder eines anderen zahntechnischen Instrumentes frei ist. Nach Drehung des Deckels zur Entfernung seiner Öffnung von dem Füllstück der Dose kann von dem Doseninhalt, genommen werden und anschließend wird durch Zurückdrehen des Deckels die Dose wieder verschlossen, so daß ihr Inhalt immer staubgeschützt ist und ihre Qualität im Laufe der Zeit keine Einbuße erleidet. Die Führung des Deckels auf der Dose mit Hilfe einer endlosen Rille bewirkt, daß der Deckel in jeder Position mit der Dose verbunden bleibt und weder verlegt werden noch verloren gehen kann, so das auf dem Deckel angebrachte Kennzeichnungen und Angaben dem Inhalt des Spenders zuverlässig zugeordnet bleiben. Als Kennzeichnungsträger kann auch die Oberfläche des Füllstückes dienen, die in Schließposition des Deckels durch dessen Öffnung sichtbar ist.

In vorteilhafter Ausgestaltung der Erfindung ist der Deckel kappenförmig gestaltet und es ist vorgesehen, daß auf dem Außenumfang des Kappenmantels ein Rändelring ausgebildet ist. Dieser erleichtert die Drehung des Deckels mit einem Finger oder mit dem Daumen der den Spender haltenden Hand. An dem Außenumfang der Wand der Dose und an dem Innenumfang des Kappenmantels des Deckels sind eine Ringrille bzw. ein Vorsprung angeordnet, die zusammengreifen und als Deckelführung dienen. Außerdem sichern sie den Deckel gegen ungewolltes Abziehen von der Wand der Dose.

Um zu erreichen, daß die Öffnung des Deckels verhältnismäßig groß ist und bei seiner Drehung den gesamten Inhalt der Dose sukzessive freigibt und daß zur vollständigen Entleerung der Dose der Deckel nicht abgenommen zu werden braucht, is in vorteilhafter Ausgestaltung der Erfindung vorgesehen, daß das Füllstück und die Öffnung teilkreisringförmig gestaltet sind und daß an den Innenumfang des teilkreisringförmigen Füllstückes ein zentrales kreisförmiges Füllstück angesetzt ist, das von einem teilkreisringförmigen Hohlraum umgeben ist. Nur der teilkreisringförmige Hohlraum, dessen radiale Abmessung im wesentlichen derjenigen derteilkreisringförmigen Öffnung in dem Deckel entspricht, ist mit Masse füllbar und durch die Öffnung entleerbar. Das von der Deckelfläche immer verschlossen bleibende Zentrum der Dose ist durch das zentrale kreisförmige Füllstück besetzt und ohne den Deckel abzunehmen, kann die Dose allein durch Drehung des Deckels vollständig entleert werden.

Vorteilhafterweise verlaufen die die Enden des Hohl raumes begrenzenden Flächen des teilkreisringförmigen Füllstückes in bezug auf die Dosenmitte radial. Auf diese Weise wird das Hohlraumvolumen vergrößert. Auch die Seitenränder der Öffnung in dem Deckel verlaufen radial, so daß die Öffnung am äußeren Rande größer ist als am inneren Rand. Hierdurch wird beim Entnehmen des Doseninhaltes durch die Öffnung in Offenstellung des Deckels keins übermäßig große Oberflächenzone der Masse freigegeben. Kleine Nasen an der Innenfläche des Deckels neben den Seitenrändern der Öffnung wirken mit den Seitenkanten des teilkreisringförmigen Füllstückes als Anschläge zusammen und vermitteln eine leicht überwindbare Drehsicherung des Deckels in Schließposition.

Die Dose kann aus Kunststoff geformt sein. Dabei sind vorteilhafterweise die beiden Füllstücke, deren Oberflächen im wesentlichen in der Ebene des freien Randes der Dosenwand liegen, als hohle Erhebungen in den Boden der Dose eingeformt. Auf diese Weise wird Kunststoffmaterial eingespart und das Gewicht des Spenders wird verringert.

Da bei der Verarbeitung von zahntechnischem Verblendmaterial mehrere verschiedene Massen benötigt werden, ist es günstig, diese zu einem Satz zusammenzufassen, damit sie dem Anwender griffbereit zur Verfügung stehen. Dies gelingt mit dem erfindungsgemäßen Spender auf besonders einfache Weise dadurch, daß der Boden der Dose an der Unterseite von einem vorstehenden Ring umgeben ist und daß der Deckel eine obere Randzone aufweist, die in den Ring paßt. Auf diese Weise lassen sich beliebig viele Spender verschiebungsgesichert, jedoch axial voneinander trennbar übereinander stapeln. Es können auf diese Weise Verkaufseinheiten z.B. von Dreier-Sets pro Farbe gebildet werden, die sich von dem Benutzer übersichtlich aufbewaren und einfach handhaben lassen.

In der Zeichnung is ein Ausführungsfbeispiel der Erfindung dargestellt. Es zeigen

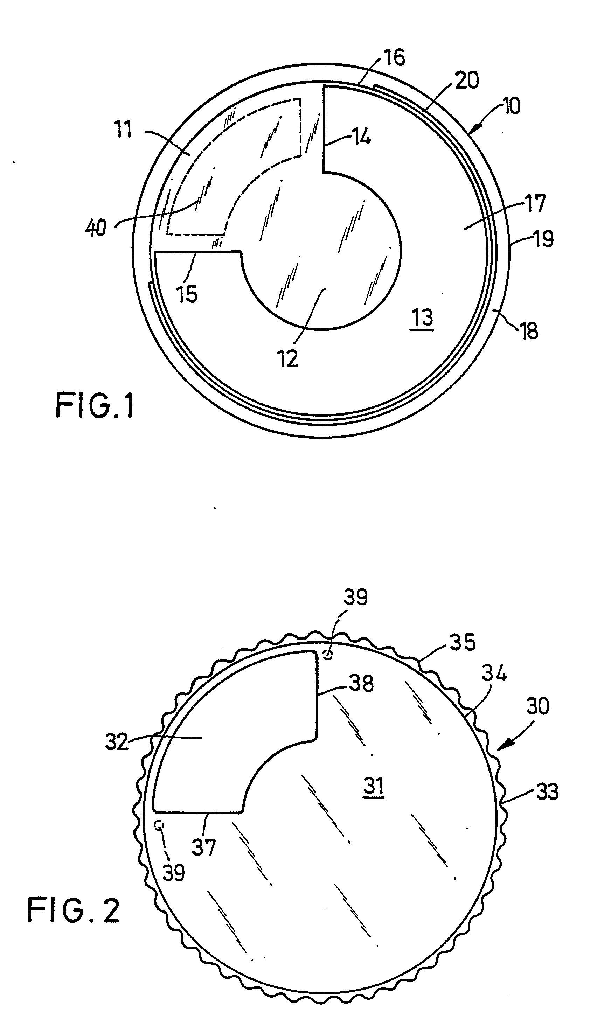

Fig. 1 eine Draufsicht auf die offene Dose der Spenders,

Fig. 2 eine Draufsicht auf den Deckel des Spenders und

Fig. 3 einen Schnitt durch zwei stapelbare Spender, die jeweils aus Dose und Deckel gebildet sind.

Der Hohlraum einer kreisförmigen Dose 10, vorzugsweise aus Kunststoff, wird durch ein teilkreisrinförmiges Füllstück 11 und ein an dessen Innenumfang angrenzendes kreisförmiges Füllstück 12 so unterteilt, daß ein teilkreisringförmiger Hohlraum 13 entsteht, der insbesondere zur Füllung mit zahntechnischem Verblendmaterial bestimmt ist. Die die Enden des Hohlraumes 13 begrenzenden Flächen 14 und 15 des Füllstückes 11 verlaufen in bezug auf die Dosenmitte radial. In eine gestrichelt angedeutete flache Verlefung 40 auf der Oberseite des Füllstückes 11 kann ein entsprechend zugeschnittener Aufkleber eingesetzt werden, der den Spenderinhalt kennzeichnet. Die Höhe der beiden Füllstücke 11 und 12 entspricht im wesentlichen der Höhe der Wand 16 der Dose 10, d.h. die ebene Oberfläche der Füllstücke 11 und 12 liegt im wesentlichen in der Ebene der Dosenöffnung. Der Boden 17 der Dose 10 ist eben und zu der Öffnungsebene parallel. Auf der Außenseite der Wand 16 ist etwa auf dem Niveau des Bodens 17 eine rechtwinklige Ringschulter 18 ausgebildet, von der ein zu der Wand 16 entgegengesetzt gerichteter zylindrischer Ring 19 abgeht, der über den Boden 17 vorsteht. Ein Teil des Außenumfanges der Wand 16 ist von einer Rippe 20 umgeben, die mit Abstand vor den beiden Flächen 14 und 15 des teilkreisringförmigen Füllstückes 11 endet.

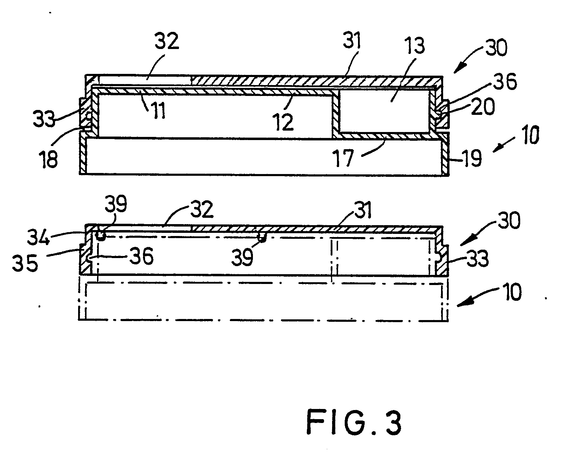

Wie Fig. 3 erkennen läßt, sind die beiden Füllstücke 11 und 12 hohl und gehen offen ineinander über. Auch ihre Unterseite ist offen. Von der Öffnung der beiden Füllstücke 11 und 12 geht der Boden 17 des teilkreisringförmigen Hohlraumes 13 aus, der an dem Ring 19 endet.

Ein die Dose 10 verschließender und auf dieser drehbarer Deckel 30 hat ebenfalls Kreisform und ist kappenförmig gestaltet. In der Randzone einer Deckelwand 31 ist eine teilkreisringförmige Öffnung 32 ausgebildet, deren Form der Form des teilkreisringförmigen Füllstückes 11 der Dose 10 im wesentlichen entspricht und die etwas kleiner ist als dieses Füllstück 11, so daß bei Deckung von Füllstück 11 und Öffnung 32 die Dose 10 verschlossen ist. Der Kappenmantel 33 des Deckels 30 ist in der an die Deckelwand 31 angrenzenden oberen Randzone 34 glatt. Unter doeser Randzone 34 ist der Außenumfang des Kappenmantels vorspringend gerändelt, so daß ein Rändelring 35 entsteht, der die Drehung des Deckels 30 auf der Dose 10 erleichtert. Auf der Innenfläche des Kappenmantels 33 ist eine geschlossene Ringrille 36 ausgebildet, die mit der Rippe 20 an der Dosenwand 16 zusammengreift und den Deckel 30 bei seiner Drehung führt, sowie gegen unbeabsichtigtes Abziehen sichert. Die glatte Randzone 34 des Kappenmantels 33 paßt in den Ring 19 des Deckels 30, so daß beliebig viele der aus Dose 10 und Deckel 30 bestehenden Spender zu einem Stapel zusammengesteckt werden können, der sich durch axiales Ausseinanderziehen in einzelne Spender zerlegen läßt.

Neben den Seitenrändern 37 und 38 der Öffnung 32, die ebenfalls radial verlaufen, sind an der Unterfläche der Deckelwand 31 kleine Vorsprünge 39 ausgebildet, die durch Anschlag gegen die Seitenflächen 14 und 15 des Füllstückes 11 eine leicht überwindbare Drehsicherung des Deckels 30 in Verschlußstellung bewirken.

## Ansprüche

1. Spender für pastöse Massen, insbesondere zahntechnisches Verblendmaterial oder dergleichen, in Form einer von einem Deckel verschlossenen kreisförmigen Dose mit einem Boden und einer Wand,
**dadurch gekennzeichnet,**
daß in dem Randbereich des Dosenhohlraumes ein Füllstück (11) angeordnet ist, das in Schließposition des Deckels (30) eine in dem Deckel (30) ausgebildete Öffnung (32) abdeckt und daß der Deckel (30) in einer endlosen Rille (36) geführt auf der Dose (10) drehbar ist.

2. Spender nach Anspruch 1, dadurch gekennzeichnet, daß der Deckel (30) kappenförmig gestaltet ist und daß auf dem Außenumfang des Kappenmantels (33) ein Rändelring (35) ausgebildet ist.

3. Spender nach Anspruch 1 oder 2, dadurch gekennzeichnet, daß an dem Außenumfang der Wand (16) der Dose (10) und an dem Innenumfang des Kappenmantels (33) des Deckels (30) eine Ringrille (36) bzw. ein Vorsprung (20) angeordnet sind, die zusammengreifen und als Deckelführung dienen.

4. Spender nach einem der Ansprüche 1 bis 3, dadurch gekennzeichnet, daß das Füllstück (11) und die Öffnung (32) teilkreisringförmig gestaltet sind und daß an den Innenumfang des teilkreisringförmigen Füllstückes (11) ein zentrales kreisförmiges Füllstück (12) angesetzt ist, das von einem teilkreisringförmigen Hohlraum (13) umgeben ist.

5. Spender nach Anspruch 4, dadurch gekennzeichnet, daß die die Enden des Hohlraumes (13) begrenzenden Flächen (14, 15) des teilkreisringförmigen Füllstückes (11) in bezug auf die Dosenmitte radial verlaufen.

6. Spender nach einem der Ansprüche 1 bis 5, dadurch gekennzeichnet, daß die Dose (10) aus Kunststoff geformt ist und daß die beiden Füllstücke (11, 12), deren Oberflächen im wesentlichen in der Ebene des Randes der Dosenwand (16) liegen, als hohle Erhebungen in den Boden (17) der Dose (10) eingeformt sind.

7. Spender nach einem der Ansprüche 1 bis 6, dadurch gekennzeichnet, daß der Boden (17) der Dose (10) an der Unterseite von einem vorstehenden Ring (19) umgeben ist und daß der Deckel (30) eine obere Randzone aufweist, die in den Ring (19) paßt.

0 240 685

FIG.1

FIG.2

FIG. 3